# EUROPEAN PATENT APPLICATION

(11) **EP 2 282 102 A2**
(43) Date of publication of application: **09.02.2011**
(21) Application number: 10171580.3
(22) Date of filing: 02.08.2010
(51) Int. Cl.: F16L 37/091

(54) **Pipe coupling**

(30) Priority: 03.08.2009 US 230836 P
(71) Applicant: GSA Industries (Aust.) Pty Ltd, Melbourne, VIC 3000 (AU)
(72) Inventor: Kluss, William Vernon, Forest Lake, Queensland 4078 (AU)
(74) Representative: Kling, Simone

(57) **Abstract**

A pipe coupling (10) for coupling to a pipe end. The coupling including first and second body parts (12 and 13), a grip ring (18), an O-ring seal (17) and a sleeve (50). The first and second body parts (12 and 13) are aligned axially and define a cavity (16) into which a pipe end (11) can be inserted. Each of the grip ring (18) and the O-ring (17) are located within the cavity (16). The grip ring (18) grips the pipe end (11) against retraction from the cavity (16) and the O-ring (17) seals against the outer surface of the pipe end (11). The sleeve (50) extends circumferentially about the first and second portion body parts (12 and 13) and engages the body parts (12 and 13) to resist movement of the body parts axially away from each other.

## Description

### FIELD OF THE INVENTION

The present invention relates to a pipe coupling and a method of manufacturing a pipe coupling for connecting pipes to other pipes and fittings.

### BACKGROUND OF THE INVENTION

A reference herein to matter which is given as prior art is not to be taken as an admission that the matter was, in Australia, part of the common general knowledge as at the priority date of any of the claims.

Pipes can be connected together by pipe couplings or fittings, in order to build pipe installations, which can comprise multiple lengths of pipe sections and piping components (valves, meters and the like). Such pipe couplings can facilitate end-to-end connection of pipe sections, or they can route the pipe sections at particular angles. For example, pipe fittings can be employed to change the direction of piping, such as by 45° or 90°. In addition, pipe couplings can be employed to branch or split piping in different directions. For example, a single pipe section can be connected by a T-fitting or a Y-fitting, each of which branches that pipe section into two separate pipe sections. Other fittings can branch a single pipe section into more than two separate pipe sections.

For commercial acceptance, pipe couplings preferably are easy and quick to use and are relatively inexpensive. Moreover, the couplings need to provide a watertight or airtight fitting (typically the couplings of the present invention will be used in piping installations which convey liquids or liquid slurries, i.e. sewerage for example, although they can also be used for piping gases), while the couplings must also provide secure connection to the ends of the pipe sections or piping components to which they are fitted.

Pipe couplings are usually exposed to the fluid carried within the piping installations to which the couplings are fitted. Moreover, the pipe couplings are often exposed to external conditions such as wind and rain, dust and grime etc. Accordingly, in the past, some pipe couplings have been manufactured from non-ferrous metal to prevent rusting and corrosion. Brass has been one metal employed for that purpose. While the use of brass for the manufacture of pipe couplings has been effective in resisting rust and corrosion, a drawback with brass is that it is both relatively heavy and in more recent times, expensive. The weight of brass does not affect the actual performance of a brass coupling or cause difficulties in installation, but rather, the weight adds cost when the couplings are transported in bulk. Combined with the increasing cost of brass metal, the cost of brass fittings is becoming prohibitive.

Moreover, when a pipe coupling is employed in piping installations that carry drinking water, the exposure of that water to the brass material can taint the flavour of the water unacceptably. In addition, it has been recognised that metals can contain potentially harmful agents such as lead, which can leech from the metal into the fluid carried within the piping installation. Because of this, certain countries have introduced regulations limiting the content of such agents in the materials used in pipe couplings. As a result, in order to satisfy the regulations, more expensive metal fittings have become necessary.

The present invention aims to provide a pipe coupling, which provides advantages over certain types of couplings in present use. Applicant is hopeful that the present invention can provide cost and weight savings compared to some pipe couplings in use presently, and/or potentially can also reduce the likelihood of the flavour of drinking water being tainted as described above, and/or reduce the likelihood of potentially harmful agents leeching into the fluid carried within the piping installation.

### SUMMARY OF THE INVENTION

According to the present invention there is provided a pipe coupling for coupling to a pipe end of a pipe section, the coupling being arranged to receive a pipe end and to retain the pipe end relative to the coupling, the coupling including,
first and second body parts,
an arrangement for gripping the outer surface of the pipe end,
an arrangement for sealing against the outer surface of the pipe end and a sleeve,
the first and second body parts being aligned axially in the direction of insertion of a pipe end into the coupling and defining a cavity into which a pipe end can be inserted,
each of the gripping arrangement and the sealing arrangement being located within the cavity so that upon insertion of a pipe end into the first and second body parts, the gripping arrangement grips the pipe end against retraction out of the cavity and the sealing arrangement seals against the outer surface of the pipe end,
the sleeve extending circumferentially about the first and second body parts and engaging the first and second body parts to resist movement of the body parts axially away from each other.

A pipe coupling according to the invention can be assembled from components of different materials, which provides the advantage, that the material selection can be based on a reduction in the cost of the coupling and/or the weight of the coupling. Moreover, the materials can be selected to be materials which do not have an effect on the flavour of drinking water that might be flowing through the piping installation in which the pipe couplings are employed, or which do not include potentially harmful agents that might otherwise leech into the fluid carried within the piping installation.

Accordingly, the first body part can be manufactured from a suitable plastic, while the sleeve can be manufactured from a suitable metal, such as a brass metal. This arrangement will reduce the amount of metal that is employed in the coupling compared to some pipe couplings presently in use. By forming the first body part from plastic rather than from metal, a reduction both in cost and weight of the pipe coupling can be achieved. This is particularly advantageous in relation to the bulk transport of couplings, both for overland and overseas transport, given that the amount of pipe couplings that can be placed within a shipping container can be determined by the overall weight of the couplings to be transported. Applicant has experience of being unable to load shipping containers to full volume capacity because the weight capacity has already been reached. Thus, it is envisaged that a greater number of pipe couplings can be loaded into a standard shipping container when the couplings are formed according to the invention, as opposed to couplings which have been employed in the past and which have a greater metal content.

Moreover, by employing a composite construction in which the sleeve is metallic and the first body part is plastic, the cost of the coupling can be reduced by the reduction in the use of more expensive metal, usually brass, over less expensive plastic. Applicant has an expectation of significant savings over some pipe couplings presently in use which having a greater brass content as compared to couplings according to the invention in which the brass content is limited to the sleeve.

Still further, a pipe coupling according to the invention can be arranged so that any contact that is made between drinking water and the coupling, is made with plastic components of the coupling, rather than the metallic components. This contact can be taint neutral, so that the flavour of the drinking water is not affected by contact with components of the pipe coupling. Moreover, the absence of any contact of drinking water with metal components can minimise or eliminate the possibility of the leeching of potentially harmful agents into the drinking water. Thus, a pipe coupling according to the invention can be made to satisfy regulations relating to contamination but without the need to employ more expensive metal components.

The invention thus in some forms, is expected to provide advantages in relation to both cost and weight considerations, when compared with some pipe couplings which have been employed in the past. In addition, in some forms of the invention, advantages are envisaged to be available in relation to minimising or indeed eliminating the effects of taint or contamination on drinking water supply. Some or all of these advantages are expected to be provided without affecting the ease with which the pipe couplings are installed and without affecting in any significant degree, the size or shape of the pipe couplings as compared to some pipe couplings presently in use.

It will be appreciated from the above discussion, that in some forms of the invention, the first body part can be manufactured from a plastic material. Suitable plastics may include polyamide, polysulphone, PVDF, polyethylene, polybutylene, POM, PEX, or suitable engineering plastic. It will also be appreciated, that in some forms of the invention, the sleeve of the coupling can be metallic, and preferably is brass. Brass provides benefits in relation to resistance to rust and corrosion and in relation to manufacturing methods, that other metals do not necessarily provide. For example, brass is relatively easily machined and formed and is non-ferrous, thereby making it an ideal metal for use as a component of the pipe coupling. However, other suitable metal materials include brass, copper and stainless steel.

The cavity which is defined by the first and second body parts is intended to house each of the gripping arrangement and the sealing arrangement.

In some forms, the gripping arrangement can comprise a grip ring, which is an annular ring, of which the radially inner edge is arranged to engage against the surface of a pipe end which is inserted into the pipe coupling. The intention is that the grip ring will allow easy insertion of a pipe end into the coupling, but will resist retraction of the pipe end out of the coupling. The radially inner edge of the grip ring can be arranged to frictionally engage the outer surface of the pipe end, or it can be arranged to penetrate or bite slightly into the outer surface. Thus, the radially inner edge can be formed to have a sharp edge for penetrating the outer surface of the pipe end, or the edge can be arranged for appropriate frictional engagement with the outer surface.

A grip ring which is suitable for use in a coupling of the present invention can be angled in the direction of insertion of a pipe end into the coupling, or have a radially inner portion which is angled in the direction of insertion of a pipe end into the coupling, so that as a pipe end is inserted into the cavity, the grip ring provides little or no resistance to that insertion. However, the direction of the angle of the grip ring or the inner portion is such that if a force is applied to the pipe end in a direction to withdraw it from the cavity, the grip ring or inner portion grips the pipe end. Advantageously, the arrangement can be such that as the withdrawal force increases, the gripping force can also increase proportionally. Thus, the arrangement can be such that a greater withdrawal force is met with a greater resistance by the grip ring.

In order to allow release of a pipe end from the coupling, a release mechanism can be provided to disengage the gripping arrangement from gripping the outer surface of the pipe end, or to reduce the force with which the pipe end is gripped, so that the pipe end can be withdrawn. Any suitable arrangement can be employed for that purpose. In some arrangements, a member is employed which can move from a first disengaged position to a second engaged position, in which in the second engaged position, the member engages the grip ring and either shifts it to a position disengaged from the pipe surface, or shifts it in a manner that reduces the gripping force it applies to the pipe end. The member can be a sliding member which is slidable between the disengaged and engaged positions, and the member can be actuatable externally of the pipe coupling such as by finger pressure, or by the use of a suitable tool, in order to engage the grip ring.

In one form, the member includes a head which can be wedge shaped or tapered, or otherwise shaped and which is disposed within the cavity defined between the first and second body parts. The head can be positioned in the disengaged position adjacent to the portion of the grip ring which engages the outer surface of the pipe end. When member is moved or slid inwardly towards the grip ring, the head engages that ring and disengages it from the surface of the pipe end. In this form of the invention, the member can include a tail portion, which extends out of the cavity of the coupling for manual actuation. The member can be a cylindrical member which extends fully about the pipe end, or it can be one or more members which are disposed to engage the grip ring at a particular position. Those members can be separate to each other or they can be connected.

The sealing arrangement can also take any suitable form, although in most forms of the invention, the sealing arrangement will comprise an O-ring. Alternatively, a general rubber ring or a profiled rubber seal can be employed.

The sealing arrangement can be isolated from the gripping arrangement by a spacer that is disposed between the respective arrangements and in one form, the spacer can be in the form of an annular ring, which forms a barrier to shifting movement of the gripping arrangement into contact with the sealing arrangement. Where the gripping arrangement comprises a grip ring, the barrier can also serve to ensure that the grip ring is maintained against moving with a pipe end as the pipe end is inserted into the coupling. While a small amount of movement of the grip ring is acceptable, ie the grip ring can be a loose fit within the cavity rather than being firmly fixed in place, more substantial movement is preferably avoided.

A supporting arrangement can also be employed in the coupling in order to support the pipe end against internal deflection or collapse when the pipe end is inserted into the coupling and later, if the pipe end is exposed to loads tending to withdraw the end from the coupling. The supporting arrangement can take any suitable form, and in some forms, comprises a cylindrical tube which extends into the interior of a pipe end which is inserted into the coupling and which bears against the internal surface of the pipe end and resists inward deflection of the pipe end. The tube can include a radial flange, which extends radially outwardly, and which engages against the end surface of the pipe end to locate the tube in the pipe end. The tube can be a frictional fit within the pipe end.

The supporting arrangement can be formed as part of the coupling, or can be attached to the pipe end prior to insertion of that end into the coupling. The preference is for the supporting arrangement to be formed as part of the coupling, to facilitate ease of installation of the coupling.

With reference to the sleeve of the coupling, this can include portions for engagement with each of the first and second body parts. In some arrangements, the sleeve has first and second end portions opposite each other and an intermediate portion which extends between the respective end portions. In this form of sleeve, it is proposed that each of the respective end portions engage or bear against a respective one of the first and second body parts. For example, a first end portion can bear against the first body part, and the second end portion can bear against the second body part. Any suitable arrangement for engaging the first and second body parts can be adopted.

The intermediate portion of the sleeve can be generally cylindrical, while the first and second end portions can extend radially inwardly from opposite ends of the intermediate portion. In some forms of the invention, the first end portion can extend inwardly from one end of the intermediate portion, generally perpendicular to the axis of the intermediate portion. That is, the first end portion can extend at about 90° to the end portion. In this arrangement, the first body part can define a surface, such as a surface of a shoulder or a surface of a recess, against which the first end portion can bear.

The second end portion can also extend radially inwardly from the intermediate portion, and while the second end portion can extend at any suitable angle inwardly, in some forms of the invention, the inclined angle is from about 30° to about 60°. The second body part can define a surface which is inclined to approximately the same angle and against which the second end portion of the sleeve can bear.

The first body part can include a radially inwardly extending flange or abutment surface, against which the end of a pipe end which is inserted into the coupling can abut. In some arrangements, when a supporting arrangement for supporting the pipe end against radial collapse is employed, a flange of the supporting arrangement will be interposed between the abutment surface and the end of the pipe end.

The present invention also extends to a method for forming a pipe coupling, which includes forming a sleeve and attaching the sleeve to a first body part to form a composite body part and sleeve. The method then extends to fitting a gripping component and a sealing component to the composite body part and sleeve and then fitting a second body part. The first and second body parts define a cavity within which is housed each of the gripping component and the sealing component and the method then extends to forming the sleeve to engage the second body part and to maintain the second body part in position relative to the composite body part and sleeve.

Thus, the method involves forming a composite body part and sleeve first and thereafter assembling to the composite body part and sleeve the gripping component, the sealing component and the second body part, and thereafter forming the sleeve to maintain the first and second body parts in position relative to each other.

Formation of the composite body part and sleeve can be by any suitable method, but in some forms of the invention, the sleeve is formed from a suitable metal and is thereafter inserted into a plastic moulding die and the first body part is moulded in plastic into attachment with the sleeve. The sleeve can be formed by rolling to form a cylindrical body portion and an inwardly extending radial flange, with the first body part to form an outwardly extending radial shoulder, or a radial surface, which is positioned relative to the sleeve so that the inwardly extending radial flange of the sleeve bears against the outwardly extending radial surface when the composite body part and sleeve are formed together.

The method can further include further formation of the sleeve, by rolling an end of the sleeve that overlies the second body part into engagement with the second body part. By this method, each of the first and second body parts are engaged by the sleeve and by that engagement, the respective body parts are retained in position relative to each other.

For a better understanding of the invention and to show how it may be performed, embodiments thereof will now be described, by way of non-limiting example only, with reference to the accompanying drawings.

### BRIEF DESCRIPTION OF THE DRAWINGS

Figure 1 is a cross-sectional view of a pipe coupling to the invention.
Figure 2 shows the pipe coupling 10 of Figure 1 applied to a T-fitting.
Figure 3 shows the pipe coupling 10 of Figure 1 applied to an elbow fitting.
Figures 4 and 5, illustrate the coupling in perspective and end view showing an anti-rotation arrangement.

### DETAILED DESCRIPTION OF THE DRAWINGS

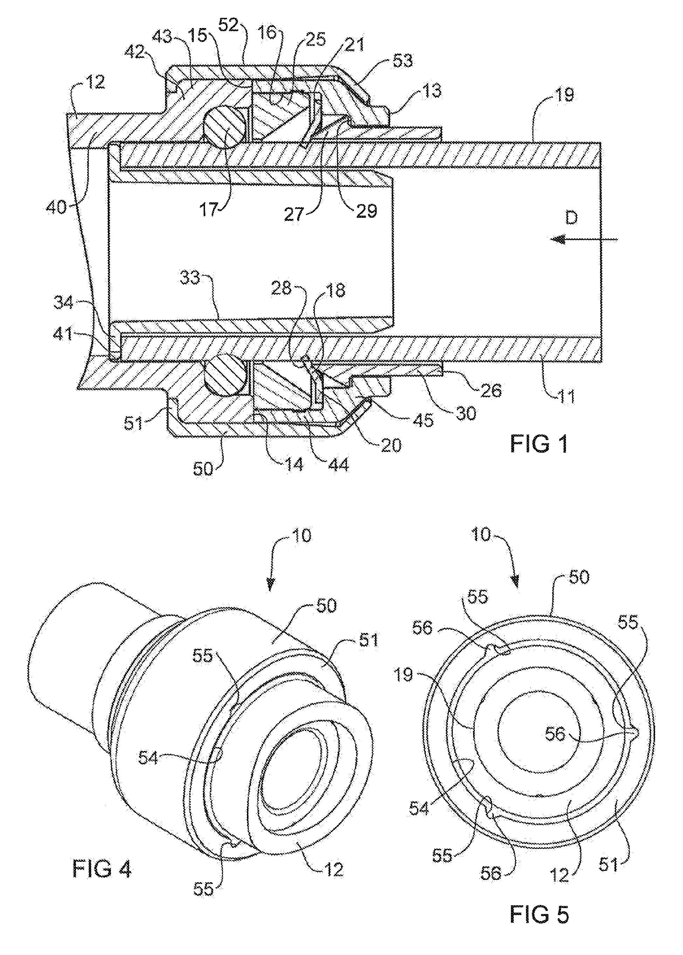

Figure 1 is a cross-sectional view of a pipe coupling or pipe fitting 10 according to the invention. The coupling 10 is shown with a pipe end 11 of a pipe section inserted into the coupling in the direction D. The pipe end 11 is cylindrical.

The pipe coupling 10 includes first and second body parts 12 and 13, which are aligned axially in the direction D. The body parts 12 and 13 are shown in abutting engagement at the facing surfaces 14 and 15 although it will be apparent that those surfaces are not required to be in abutting engagement for the coupling 10 to be operable.

The first and second body parts 12 and 13 define a cavity 16 within which is disposed a sealing arrangement in the form of an O-ring 17 and a gripping arrangement in the form of a grip ring 18. The grip ring 18 can otherwise be known as a grab ring.

The grip ring 18 is operable to grip the outer surface 19 of the pipe end 11 once the pipe end 11 is inserted into the coupling 10. By that gripping of the outer surface, the grip ring resists withdrawal of the pipe end 11 from the coupling 10.

The grip ring 18 comprises an upper end 20 and a bottom end 28. The upper end 20 extends generally perpendicular to the axis of the pipe end 11, while the bottom end 28 is angled to the top end 20 in the direction D. The direction in which the bottom end 28 is angled is such that the grip ring 18 allows easy insertion of the pipe end 11 into the cavity 16, but resists retraction of the pipe end 11 out of the cavity 16. The grip ring can be a metal component, such as a tin or stainless steel material.

The grip ring 18 is loosely fitted within the cavity 16 and allows limited shifting movement of the pipe end 11 within the cavity 16 before the end 11 is prevented from further shifting movement in a direction of withdrawal from the cavity 16. The amount of shifting movement allowed is approximately equal to the space between the upper end 20 of the grip ring 18 and the facing surface 21 of the second body part 13. When the upper end 20 is in engagement with the facing surface 21, withdrawal of pipe end 11 from the cavity 16 in a direction reverse to the direction D is resisted. The grip ring 18 more firmly grips the outer surface 19 of the pipe end 11 as the force retracting the pipe end 11 from within the cavity 16 increases. Thus, the gripping load applied by the grip ring 18 to the pipe end 11 increases as the load retracting the pipe end 11 increases. The resistance load is therefore self-generating.

A protection ring 25 is also disposed within the cavity 16, between the O-ring 17 and the grip ring 18. The protection ring 25 bears against the upper end 20 of the grip ring 18 and against one side of the O-ring 17. The protection ring 25 thus secures the O-ring 17 in position within the first body part 12 and secures the grab ring 18 within the second body part 13 and prevents the grip ring 18 from being pushed towards and into contact with the O-ring 17 during insertion of a pipe end 11 into the cavity 16. Thus, the protection ring 25 maintains the O-ring 17 and the grip ring 18 spaced apart.

A release mechanism in the form of a demount ring 26 is provided for disengaging the grip ring 18 from gripping the outer surface 19 of the pipe end 11 when the pipe end 11 is to be withdrawn from the cavity 16. The demount ring 26 includes a tapered head 27, which is closely adjacent the bottom end 28 of the grip ring 18 and which is located by engagement with a shoulder 29 of the second body part 13. By engagement with the shoulder 29, the demount ring 26 is captured within the cavity 16.

The demount ring 26 further includes a cylindrical body 30 which extends outside of the cavity 16. The body 30 is used to push the demount ring 26 in the direction D, to engage the bottom end 28 of the grip ring 18 and to lift it out of gripping engagement with the outer surface 19 of the pipe end 11. By that arrangement, the pipe end 11 can then be withdrawn from within the cavity 16. Shifting of the demount ring 26 in the direction D can be by finger pressure, or by the use of a suitable tool.

A supporting arrangement in the form of a tube liner 33 is fitted inside the pipe end 11 and includes an end flange 34 to locate the liner 33 to the end of the pipe end 11. The tube liner 33 is intended to provide radial support for the pipe end 11 against collapse, or inward deflection, when a load tending to withdraw the pipe end 11 out of the cavity 16 is imposed on the pipe end 11. This ensures that the grip ring 18 maintains proper gripping of the pipe end 11 to prevent withdrawal. The tube liner 33 can be of a metal material, although it is preferred that the material is plastic.

The first body part 12 includes a radially inwardly extending flange 40 against which the inner end 41 of the pipe end 11 and the end flange 34 of the tube liner 33 abut. The first body part 12 further includes a radially outwardly extending flange 42 from which extends a cylindrical section 43. The flange 42 and the cylindrical section 43 define a portion of the cavity 16 within which the O-ring 17 is disposed.

The second body part 13 includes a cylindrical section 44 and an external tapered section 45 which define the remaining portion of the cavity 16 within which the protection ring 25, the grip ring 18 and the head 27 are disposed.

Connected to and overlying each of the first and second body parts 12 and 13, is a sleeve 50. The sleeve 50 includes a radially inwardly depending section 51, a cylindrical section 52 and a further radially inwardly depending section 53. In can be seen from Figure 1, that the sleeve 50 is a snug fit about the outer surfaces of the first and second body parts 12 and 13, although in practice, an imperfect fitting is acceptable. The sleeve 50 is operable to resist movement of the respective body parts 12 and 13 axially away from each other. Thus, as shown in Figure 1, the first and second body parts 12 and 13 house the O-ring 17, protection ring 25, the grip ring 18 and the head 27, while the sleeve 50 is operable to maintain the first and second body parts 12 and 13 from separation.

The coupling 10 can be formed as shown in Figure 1 prior to insertion of the pipe end 11 into the coupling 10. Thus, each of the coupling components illustrated in Figure 1, including the tube liner 33 but minus the pipe end 11, can be included in the manufactured pipe coupling. To do this, Applicant has developed an assembly method, which comprises machining and rolling the sleeve 50 partially into the shape illustrated. Thus, the sleeve 50 is formed to have the radially inwardly depending section 51 and the cylindrical section 52. The sleeve as formed is then fed into a plastic moulding machine in which the first body part 12 is moulded, so that the sleeve 50 and the first body part 12 are formed in a composite assembled condition.

Thereafter, each of the second body part 13, the O-ring 17, the grip ring 18, the protection ring 25 and the demount ring 26 are assembled to the composite sleeve and first body part. The tube liner 33 can also be inserted.

After all of the components are assembled as indicated above, the forward section 53 of the sleeve 50 can be rolled into the angled position shown in Figure 1. Once that last activity has been undertaken, the first and second parts 12 and 13 of the coupling 10 and the components within the cavity 16 are maintained in position relative to each other and a pipe end 11 can thereafter be inserted into the coupling 10.

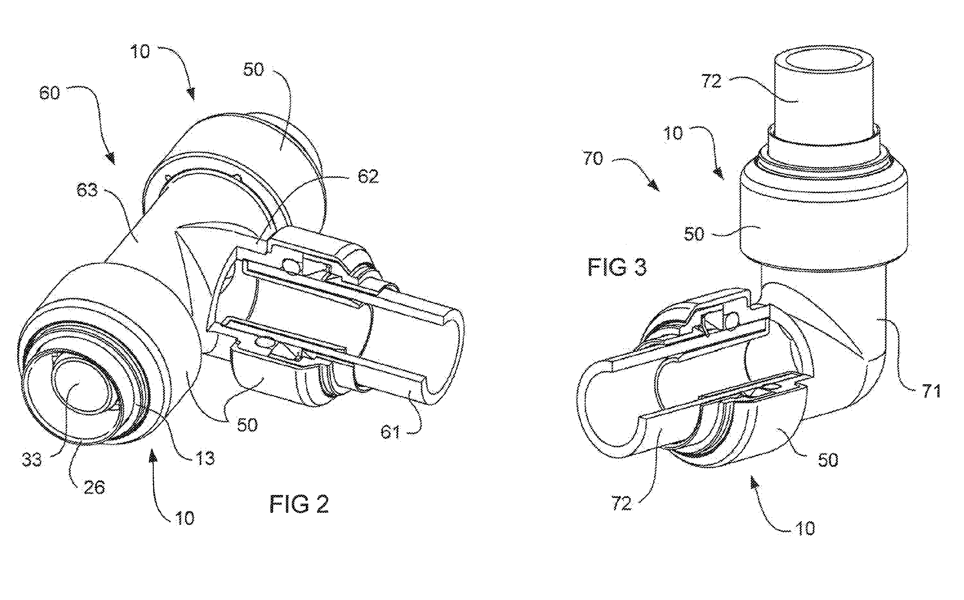

Figures 2 and 3 illustrate complete couplings which can embody the present invention. Figure 2 illustrates a T-fitting 60, in which a pipe end 61 is inserted into the coupling 10. An extension 62 of the first part 12 (not shown) of the coupling 10 is formed integrally with a T-piece 63 which extends perpendicularly to the first part 62. Each of the extension 62 and the T-piece 63 are hollow.

On each end of the T-piece 63, further pipe couplings 10 are assembled. Neither of the pipe couplings 10 has a pipe end inserted into the coupling. Accordingly, each of the second body part 13, the demount ring 26 and the tube liner 33 are visible in one of the couplings 10. In each case, the sleeve 50 is also visible.

It will be appreciated that formation of the T-fitting 63 can be according to the same method as described for the pipe coupling 10 above. Thus, each of the three sleeves 50 are formed and then inserted into a plastic moulding machine to form a composite of the three sleeves and the plastic extension 62 and the T-piece 63. The three first body parts 12 of the three couplings 10 are respectively formed integrally with the plastic extension 62 and opposite ends of the T-piece 63.

Figure 3 illustrates an elbow fitting 70, in which two couplings 10 are provided. In this arrangement, the elbow fitting 71 is integrally formed with a pair of first body parts 12, to which sleeves 50 and the remaining components of the couplings are fitted. In Figure 3, a pipe end 72 is fitted to each of the couplings 10.

Pipe couplings according to the present invention can also include an arrangement to prevent rotation of the sleeve relative to parts internally of the sleeve, such as one or both of the first and second body parts. Figures 4 and 5 illustrate one form of this arrangement, although the arrangement is also visible in Figure 2.

Figures 4 and 5, illustrate the coupling 10 looking towards the radially inwardly depending section 51 of the sleeve 50. The face 54 of the section 51 includes three recesses or grooves 55 which accept complementarily shaped projections 56 which project from the first body part 12. The first body part 12 is restricted from rotation relative to the outer surface 19 of the pipe end 11 by frictional engagement with the O-ring 17, so that cooperation between the grooves 55 and the projections 56 likewise rotation of the sleeve 50 relative to the first body part 12. This facilitates better handling of the coupling 10 as the sleeve 50 is largely prevented from rotating or slipping relative to the remaining coupling parts.

The pipe couplings 10 of the present invention are easy to use, robust and watertight. The pipe couplings have reduced weight by a reduction in the amount of metal used compared to other pipe couplings, while that reduction also reduces the cost of the pipe coupling.

The invention described herein is susceptible to variations, modifications and/or additions other than those specifically described and it is to be understood that the invention includes all such variations, modifications and/or additions which fall within the spirit and scope of the above description.

## Claims

1. A pipe coupling for coupling to a pipe end, the coupling being arranged to receive a pipe end of a pipe section and to retain the pipe end relative to the coupling, the coupling including,
first and second body parts,
an arrangement for gripping the outer surface of the pipe end,
an arrangement for sealing against the outer surface of the pipe end and
a sleeve,
the first and second body parts being aligned axially in the direction of insertion of a pipe end into the coupling and defining a cavity into which a pipe end can be inserted, each of the gripping arrangement and the sealing arrangement being located within the cavity so that upon insertion of a pipe end into the first and second body parts, the gripping arrangement grips the pipe end against retraction out of the cavity and the sealing arrangement seals against the outer surface of the pipe end, the sleeve extending circumferentially about the first and second body parts and engaging the first and second body parts to resist movement of the body parts axially away from each other.

2. A pipe coupling according to claim 1, the first body part being of plastic material and the sleeve being of metal material.

3. A pipe coupling according to claim 2, second body part being of plastic material.

4. A pipe coupling according to claim 2 or 3, the sleeve being of brass.

5. A pipe coupling according to any one of claims 1 to 4, the sleeve having first and second end portions opposite each other and an intermediate portion extending therebetween, each of the opposite end portions engaging a respective one of the first and second body parts.

6. A pipe coupling according to claim 5, the intermediate portion being generally cylindrical and each of the first and second end portions extending radially inwardly from opposite ends of the intermediate portion.

7. A pipe coupling according to claim 6, the first end portion extending inwardly from the end of the intermediate portion generally perpendicular to the axis of the intermediate portion.

8. A pipe coupling according to claim 6 or 7, the first body part defining a shoulder against which the first end portion of the sleeve bears.

9. A pipe coupling according to any one of claims 6 to 8, the second end portion extending inwardly from the end of the intermediate portion at an angle of about 30º to 60º.

10. A pipe coupling according to claim 9, the second body part defining an inclined surface against which the second end portion of the sleeve bears.

11. A pipe coupling according to any one of claims 1 to 10, the sealing arrangement comprising an O-ring seal.

12. A pipe coupling according to any one of claims 1 to 11, the gripping arrangement comprising a metal ring having a radially inner edge that engages the outer surface of the pipe end and a radially outer edge that engages a surface of the cavity.

13. A pipe coupling according to any one of claims 1 to 12, wherein the coupling is a T-fitting, or a Y-fitting or an elbow fitting.

14. A method of forming a pipe coupling, including forming a sleeve, attaching the sleeve to a first body part to form a composite body part and sleeve, fitting to the composite body part and sleeve a gripping component, a sealing component and a second body part, the first body part and the second body part defining a cavity within which is housed the each of the gripping component and the sealing component, further forming the sleeve to engage the second body part and to maintain the second body part in position relative to the composite body part and sleeve.

15. A method according to claim 14, the further forming of the sleeve comprising rolling of an end of the sleeve that overlies the second body part to engage the second body part.
